# EUROPÄISCHE PATENTANMELDUNG

(11) **EP 4 528 609 A1**
(43) Veröffentlichungstag der Anmeldung: **26.03.2025**
(21) Anmeldenummer: 23198269.5
(22) Anmeldetag: 19.09.2023
(51) Int. Cl.: G06Q 10/04, G06Q 10/0631, G06Q 50/04, G06Q 50/06

(54) **VERFAHREN ZUM BETREIBEN EINES PRODUKTIONSSTANDORTS MITTELS EINES ENERGIEMANAGEMENTSYSTEMS DES PRODUKTIONSSTANDORTS, COMPUTERPROGRAMMPRODUKT, COMPUTERLESBARES SPEICHERMEDIUM SOWIE ENERGIEMANAGEMENTSYSTEM**

(71) Anmelder: Siemens Aktiengesellschaft, 80333 München (DE)
(72) Erfinder: Amthor, Arvid, 98631 Grabfeld OT Nordheim (DE); Baumgärtner, Thomas, 91056 Erlangen (DE); Bernsdorf, Ingo, 14165 Berlin (DE); Hammer, Thomas, 91334 Hemhofen (DE); Hartung, Jörn, 13405 Berlin (DE); Metzger, Michael, 85570 Markt Schwaben (DE); Niessen, Stefan, 91056 Erlangen (DE); Schanda, Marco, 80999 München (DE); Schreck, Sebastian, 90429 Nürnberg (DE); Thiem, Sebastian, 91413 Neustadt an der Aisch (DE); Wagner, Lisa, 90768 Fürth (DE); Zupan, Nejc, 80337 München (DE)
(74) Vertreter: Siemens Patent Attorneys

(57) **Zusammenfassung**

Die Erfindung betrifft ein Verfahren zum Betreiben eines Produktionsstandorts (10) mittels eines Energiemanagementsystems (12), mit den Schritten; Vorgeben eines aktuellen Produktionsplans (32) für den Produktionsstandort (10); Bestimmen eines potentiellen Energiebedarfs (34, 36) von zumindest einer Produktionsanlage (18, 20) des Produktionsstandorts (10) in Abhängigkeit von dem aktuellen Produktionsplan (32); Bestimmen einer Betriebsstrategie (B1, B2) für die Produktionsanlage (18, 20) in Abhängigkeit von dem potentiellen Energiebedarf (34, 36) und in Abhängigkeit von einem vorgegebenen Optimierungskriterium (38); und Bestimmen einer weiteren Betriebsstrategie (B3, B4, B5) für eine Energiebereitstellung für den Produktionsstandort (10), wobei die Energiebereitstellung Energie für die Produktionsanlage (18, 20) und/oder eines Gebäudes (16) des Produktionsstandorts (10) und/oder einer externen Energiebereitstellungseinrichtung umfasst und/oder eine Steuerung einer Energieerzeugungsanlage (30) des Produktionsstandorts (10) umfasst. Ferner betrifft die Erfindung ein Computerprogrammprodukt, ein computerlesbares Speichermedium sowie ein Energiemanagementsystem (12).

## Beschreibung

Die Erfindung betrifft ein Verfahren zum Betreiben eines Produktionsstandorts mittels eines Energiemanagementsystems des Produktionsstandorts gemäß dem geltenden Patentanspruch 1. Ferner betrifft die Erfindung ein Computerprogrammprodukt, ein computerlesbares Speichermedium sowie ein Energiemanagementsystem.

Die Erhöhung der Energieeffizienz bzw. Reduktion eines CO₂-Fußabdrucks an einem Industriestandort über Domänengrenzen hinweg in einer ganzheitlichen Betrachtung ist von entscheidender Bedeutung. Insbesondere bedeutet dies, dass sowohl die eigentliche Produktion betreffende Faktoren, wie auch die Gebäude betreffende Faktoren, bspw. inklusive Ladestationen für Elektromobilität, und eigene Energieversorgung berücksichtigt werden.

Neben dem nicht vernetzten Betrieb einzelner Anlagen existieren auch zahlreiche Einzellösungen im Stand der Technik. Von der Konnektivität einzelner Anlagen im Gebäudeindustrie und Analyse der Verbräuche in einer sogenannten Cloud bis hin zu Spitzenlastmanagementbausteinen, sowie Gebäudeenergiemanagementsystemen als auch Programme der Simulation von Industrieanlagen sind entsprechende Systeme bekannt.

Auch selbst organisierende Produktionssysteme im Stand der Technik sind bereits bekannt.

Aufgabe der vorliegenden Erfindung ist es ein Verfahren, ein Computerprogrammprodukt, ein computerlesbares Speichermedium sowie ein Energiemanagementsystem zu schaffen, mittels welchem ein verbesserter Betrieb eines Produktionsstandorts realisiert werden kann.

Diese Aufgabe wird durch ein Verfahren, ein Computerprogrammprodukt, ein computerlesbares Speichermedium sowie ein Energiemanagementsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Produktionsstandorts mittels eines Energiemanagementsystems des Produktionsstandorts. Es wird ein aktueller Produktionsplan für den Produktionsstandort mittels einer elektronischen Recheneinrichtung des Energiemanagementsystems vorgegeben. Es erfolgt das Bestimmen eines potentiellen Energiebedarfs von zumindest einer Produktionsanlage des Produktionsstandorts in Abhängigkeit von dem aktuellen Produktionsplan mittels der elektronischen Recheneinrichtung. Es wird eine Betriebsstrategie für die Produktionsanlage in Abhängigkeit von dem potentiellen Energiebedarf und in Abhängigkeit von einem vorgegebenen Optimierungskriterium mittels der elektronischen Recheneinrichtung bestimmt. Es wird eine weitere Betriebsstrategie für eine Energiebereitstellung für den Produktionsstandort, wobei die Energiebereitstellung Energie für die Produktionsanlage und/oder eines Gebäudes des Produktionsstandorts und/oder einer externen Energiebereitstellungseinrichtung umfasst und/oder eine Steuerung einer Energieerzeugungsanlage des Produktionsstandorts umfasst.

Insbesondere kann somit ganzheitlich betrachtet ein verbesserter Betrieb am Produktionsstandort realisiert werden. Insbesondere erfolgt nach dem Bestimmen einer entsprechenden Betriebsstrategie auch die Auswahldieser Betriebsstrategie. Hierbei können dann entsprechende Steuersignale für beispielsweis die Produktionsanlage und/oder die Energiebereitstellungseinrichtung und/oder die Energieerzeugungsanlage erzeugt werden.

Unter Energieerzeugungsanlage ist insbesondere eine Anlage zu verstehen, welche beispielsweise elektrische Energie und/oder thermische Energie erzeugen kann. Beispielsweise kann eine Energieerzeugungsanlage eine Photovoltaikanlage, eine Windturbine, ein Generator, ein Blockheizkraftwerk, aber auch andere Speichereinheiten wie Batteriespeicher, oder dergleichen sein.

Insbesondere sieht somit die Erfindung das Zusammenwirken von sogenannten selbstorganisierten Produktionssystemen mit dem Energiemanagementsystem vor.

Insbesondere bezieht sich die vorliegende Erfindung auf ein sogenanntes multimodales Energiesystem. Das heißt der selbe Ansatz ist bewusst nicht oder lediglich für elektrische Energie, bspw. Strom, begrenzt, sondern auch für andere Energieformen, wie bspw. Wärme, Kälte, Gase oder chemische Stoffe aber durchaus auch andere Stoffflüsse, z.B. andere "commodities", denkbar.

Das übergeordnete Optimierungsproblem, das zentral auf die verschiedenen Geräte aufgeteilt wird, ergibt sich damit insbesondere in dem Ziel der Minimierung der Gesamtkosten, von CO₂-Emissionen und die Maximierung des Throughputs, also der Erzeugungskapazität.

Insbesondere ist somit ein Verfahren zur intelligenten, insbesondere digital-unterstützen, Vernetzung von Produktion, Gebäude und Energieversorgung bereitgestellt. Hierbei ist die Produktion und/oder das Gebäude zumindest teilweise selbst organisierend automatisiert. Auf Standortebene werden Verbrauch und Erzeugung nach Zielkriterien dann entsprechend zusammengebracht.

Insbesondere hat dies den Vorteil, dass eine möglichst kostengünstige, CO₂-arme selbstversorgende/resilient und energieeffiziente Produktion in Zusammenwirken mit dem lokalen Standortenergiesystem bereitgestellt werden kann.

Gemäß einer vorteilhaften Ausgestaltungsform wird mittels der zumindest einen Produktionsanlage ein Leistungsprofil der Produktionsanlage bestimmt und in Abhängigkeit von dem Leistungsprofil wird der potentielle Energiebedarf bestimmt. Insbesondere wird somit jedes Gerät innerhalb des Produktionsstandorts, bspw. auch als ein Teil der Produktionsanlage, ob im Gebäude oder auch in der Produktion beteiligt, über eine intelligente Ausführung überwacht. Des Weiteren verfügt dabei jedes Gerät über eine entsprechende Leistungsmessung. Jedes Gerät lernt dabei aus seinem vergangenen Verhalten, d.h. insbesondere benötigte Leistung gegenüber Betriebsmodus, die Leistungsaufnahme bzw. Abgabe gegenüber des Betriebsmodus, ggf. als Profilpunkt. Falls ein Gerät dies nicht kann, so wird eine Leistungsmessung des Geräts oder auf einer höheren Aggregationsebene eine Leistungsmessung als Störgröße mitberücksichtigt. Somit ist es ermöglicht, dass jedes einzelne Gerät innerhalb des Produktionsstandorts einen individuellen Leistungsbedarf bestimmen, und diesen an die übergeordnete elektronische Recheneinrichtung, insbesondere an die Managementsysteme, übertragen. Somit kann detailliert und verbessert die Produktionsanlage bzw. Produktionsstandort betrieben werden.

Eine weitere vorteilhafte Ausgestaltungsform sieht vor, dass die Produktionsanlage für eine möglichst hohe Erzeugungsrate bei möglichst niedrigem Energieverbrauch incentiviert wird. Insbesondere ist jedes Gerät incentiviert das eigene Verhalten zu erlernen, um möglichst genau ein Profil anzufragen, das der Realität möglichst genau entspricht. Insbesondere kann dabei die Kapazitätsabfrage auf den Aggregationsebenen entsprechend incentiviert werden, sodass diesem mitgeteilt wird, dass entsprechende Kapazitäten Ressourcen kosten und Wartezeiten von den Geräten ebenfalls Ressourcen kosten. Dies ermöglicht eine genaue und vorzeitige Abfrage von Kapazitäten für die Geräte. Ferner können auch Betriebsstatusänderungen als Event an die übergeordnete Aggregationsschicht geleitet. Dabei incentiviert jedes Gerät bzw. jede Produktionsanlage den möglichst hohen Throughput, insbesondere gemäß Produktionsplan, sowie möglichst wenig Energie zu verbrauchen. Somit kann bereits auf der Produktionsanlagenebene eine entsprechende Verbesserung der Produktion realisiert werden.

Weiterhin vorteilhaft ist, wenn als Optimierungskriterium ein möglichst geringer CO₂-Ausstoß und/oder ein möglichst geringer Energieverbrauch vorgeben wird. Ferner können auch möglichst wenige Erzeugungskosten vorgegeben werden. Somit kann eine Optimierung des gesamten Produktionsstandorts auf Basis der entsprechenden Optimierungskriterien durchgeführt werden. Hierbei kann bspw. vorgesehen sein, dass entweder einzeln nach den Optimierungskriterien optimiert wird, bspw. singulär nach Ressourceneinsatz, oder singulär nach CO₂, oder auch gemischt mit Gewichtung, oder erst nach Ressourceneinsatz und dann in gewisser Relaxation nachgelagert nach CO₂ und/oder nach CO₂ und gewisser Relaxation nachgelagert nach dem Ressourceneinsatz. Dabei ist der Ressourceneinsatz insbesondere direkt von dem Energieverbrauch abhängig bzw. mit dem Energieverrauch gekoppelt.

Es hat sich weiterhin als vorteilhaft erwiesen, wenn bei der weiteren Betriebsstrategie ein aktuelles Wetter und/oder ein zukünftiges Wetter berücksichtigt wird. Insbesondere bei der Energieerzeugungsanlage, bspw. einer Photovoltaikanlage oder bei einer Windkraftanlage, ist es von entscheidender Bedeutung, wie die aktuelle Wetterlage ist, um somit die entsprechende Energieerzeugung aktuell bestimmen zu können bzw. die Erzeugung zukünftig vorhersagen zu können. Auf Basis dieser Wetterdaten kann somit zuverlässig die eigene Energieerzeugung vorhergesagt werden, wodurch wiederum zuverlässig auf eine entsprechende Betriebsstrategie bzw. weitere Betriebsstrategie geschlossen werden kann, wodurch insgesamt die Produktivität des Produktionsstandorts gesteigert werden kann.

Es hat sich weiterhin als vorteilhaft erwiesen, in Abhängigkeit von der bestimmten weiteren Betriebsstrategie eine Energiebereitstellung für eine Ladeeinrichtung für mobile Einrichtungen bestimmt wird. Beispielsweise kann die Ladeeinrichtung für Elektrofahrzeuge bereitgestellt werden. Insbesondere kann somit bestimmt werden, dass sollte die entsprechende Produktion ausreichend viel Energie zur Verfügung haben, dass dann Energie für Ladestationen bereitgestellt werden kann. Dies kann bspw. entsprechenden Personen mitgeteilt werden, sodass ein Laden eines Elektrofahrzeugs nun ermöglicht ist, insbesondere unter Berücksichtigung der Produktion. Somit kann sehr detailliert der Betrieb des Produktionsstandorts gesteuert werden. Hierbei kann es ferner auch Synergien mit anderen Lasten z.B. aus dem Gebäude geben, wie beispielsweise die Klimatisierung, Heizung, Kühlung, Licht, etc.

Eine weitere vorteilhafte Ausgestaltungsform sieht vor, dass bei der Betriebsstrategie eine Einschaltzeit der Produktionsanlage und/oder eine Ausschaltzeit der Produktionsanlage und/oder eine Produktionsgeschwindigkeit der Produktionsanlage und/oder ein Produktionsweg innerhalb der Produktionsanlage bestimmt wird. Insbesondere können auch entsprechende Steuersignale erzeugt werden, wodurch in Abhängigkeit von der bestimmten Betriebsstrategie auch die Produktionsanlage mittels des Energiemanagementsystems entsprechend angesteuert werden kann. Hierbei können entsprechende Einschaltzeiten bzw. Ausschaltzeiten sowie Geschwindigkeiten berücksichtigt werden, wodurch zuverlässig insbesondere in Abhängigkeit von dem Optimierungskriterium die Produktion am Produktionsstandort durchgeführt werden kann.

Ebenfalls vorteilhaft ist, dass beim Bestimmen der Betriebsstrategie und der weiteren Betriebsstrategie zumindest eine technische Randbedingung des Produktionsstandorts und/oder eine Randbedingung einer Umgebung des Produktionsstandorts berücksichtigt werden. Insbesondere können bspw. technische Randbedingungen, wie die Maximalleistung von Geräten und deren Effizienz entsprechend berücksichtigt werden. Ferner können Randbedingungen bezüglich der Umgebung, bspw. die Interaktion mit einem übergeordneten System, bspw. Stromnetz, und damit einhergehend eine Einhaltung des maximalen Leistungsbezugs, oder auch dynamisch, entsprechend berücksichtigt werden. Somit kann äußerst detailliert die Produktion entsprechend den Randbedingungen angepasst werden.

Ferner hat es sich als vorteilhaft erwiesen, wenn ein potenzieller Energiebedarf in einem Ruhemodus der Produktionsanlage mit bei der Betriebsstrategie berücksichtigt wird. Insbesondere können auch von entsprechenden Geräten, welche insbesondere Teil der Produktionsanlage sind, die entsprechenden Energiebedarfe im Ruhemodus berücksichtigt werden. Des Weiteren kann auch von weiteren Anlagen, wie bspw. Heizungen von Gebäuden oder dergleichen entsprechende benötigte Ruheenergie berücksichtigt werden. Somit kann sehr detailreich und zuverlässig eine entsprechende Betriebsstrategie ermittelt und eine Steuerung des Produktionsstandorts durchgeführt werden.

Gemäß einer weiteren vorteilhaften Ausgestaltungsform wird mittels der elektronischen Recheneinrichtung in Abhängigkeit von der bestimmten Betriebsstrategie eine Einschaltfreigabe für die Produktionsanlage erzeugt. Insbesondere wird somit die Produktionsanlage erst freigeschaltet, sobald das Energiemanagementsystem, insbesondere die elektronische Recheneinrichtung, eine entsprechende Freigabe erteilt hat. Insbesondere bevor bspw. ein Gerät bzw. die Produktionsanlage eine Einschaltfreigabe erhält, kann es eine entsprechende Anfrage an die elektronische Recheneinrichtung schicken. Sollte die entsprechende Aggregationsstufe bzw. die elektronische Recheneinrichtung in der Lage sein zu bestimmen, dass das Gerät eingeschaltet werden darf, so wird die Einschaltfreigabe erteilt. Falls dies nicht der Fall ist, wird eine aggregierte Freigabeanfrage an die nächst höhere Aggregationsstufe gestellt. Dies hat besonders den Vorteil, dass bspw. Anlagen nicht selbstständig hochgefahren werden, sondern lediglich nach Freigabe. Insbesondere ist das Energiemanagementsystem als Master-Aggregator bereitgestellt, und kennt die entsprechenden Informationen bezüglich des Gesamtsystems. Somit kann unnötiger Energieverbrauch innerhalb des Produktionsstandorts verhindert werden.

Es hat sich weiterhin als vorteilhaft erwiesen, wenn ein an der Produktionsanlage detektiertes und die Betriebsstrategie betreffendes Ereignis an die elektronische Recheneinrichtung übertragen wird. Beispielsweise kann von einer Produktionsanlage eine entsprechende Änderung erfasst werden, bspw. ein Fehler oder ein veränderter Durchsatz (Throughput) oder dergleichen. Dieses Ereignis kann dann zuverlässig an das Energiemanagement/elektronische Recheneinrichtung, übertragen werden, sodass das Energiemanagementsystem in Kenntnis gesetzt ist, welches Ereignis stattgefunden hat. Das Energiemanagementsystem kann dann eingreifen, um bspw. Gegenmaßnahmen einzuleiten bzw. in Abhängigkeit des Produktionsplans dann wiederum weitere Steuersignale für andere Geräte oder Produktionsanlagen durchführen, um beispielsweise die erforderten Optimierungskriterien zu erfüllen und/oder den Produktionsplan zu erfüllen.

Ferner hat es sich als vorteilhaft erwiesen, wenn die bestimmte Betriebsstrategie und die bestimmte weitere Betriebsstrategie mit dem Produktionsplan abgespeichert werden und für zukünftige Produktionspläne berücksichtigt werden. Beispielsweise kann eine entsprechende Betriebsstrategie und weitere Betriebsstrategie für einen Produktionsplan ermittelt werden. Bei zukünftigen ähnlichen Produktionsplänen kann somit zuverlässig auf den bestehenden Produktionsplan zurückgegriffen werden. Insbesondere können entsprechende Ähnlichkeiten zwischen dem Produktionsplan und dem zukünftigen Produktionsplan bestimmt werden, und bspw. dann Anpassungen an der Betriebsstrategie und der weiteren Betriebsstrategie vorgenommen werden. Dies kann insbesondere automatisiert erfolgen bzw. einen Nutzer der elektronischen Recheneinrichtung entsprechend vorgeschlagen werden. Somit kann äußerst effizient auch ein zukünftiger Produktionsplan abgearbeitet werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit dem Computerprogrammprodukt.

Ein nochmals weiterer Aspekt der Erfindung betrifft ein Energiemanagementsystem für einen Produktionsstandort zum Betreiben des Produktionsstandorts, mit zumindest einer elektronischen Recheneinrichtung, wobei das Energiemanagementsystem zum Durchführen eines Verfahrens nach dem vorhergehenden Aspekt ausgebildet ist. Insbesondere wird das Verfahren mittels des Energiemanagementsystems durchgeführt.

Vorteilhafte Ausgestaltungsformen des Energiemanagementsystems des Verfahrens sind als vorteilhafte Ausgestaltungsformen des Computerprogrammprodukts, des computerlesbaren Speichermediums sowie des Energiemanagementsystems anzusehen. Das Energiemanagementsystem weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

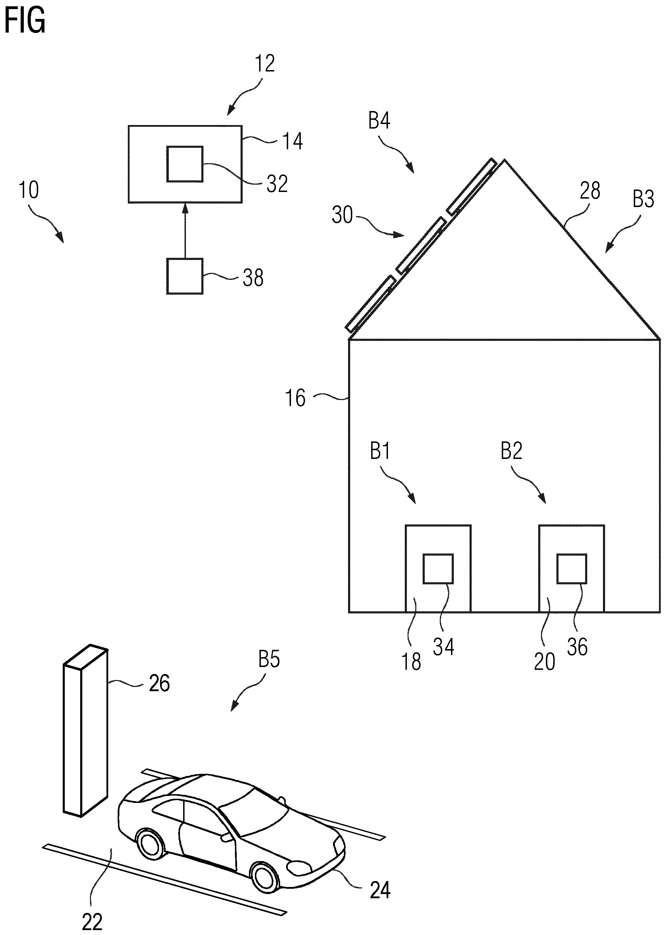

Dabei zeigt die einzige FIG ein schematisches Blockschaltbild gemäß einer Ausführungsform eines Produktionsstandorts mit einer Ausführungsform eines Energiemanagementsystems.

In der FIG sind gleiche oder funktionsgleiche Elemente mit gleichen Bezugszeichen versehen.

Die FIG zeigt in einem schematischen Blockschaltbild eine Ausführungsform eines Produktionsstandorts 10 mit einer Ausführungsform eines Energiemanagementsystems 12. Das Energiemanagementsystem 12 weist zumindest eine elektronische Recheneinrichtung 14 auf, bspw. in Form einer Cloud. Das Energiemanagementsystem 14 ist mit unterschiedlichen Komponenten vernetzt. Beispielsweise kann die elektronische Recheneinrichtung 14 mit einem Gebäude 16 in welchem eine erste Produktionsanlage 18 und eine zweite Produktionsanlage 20 ausgebildet sind, entsprechend vernetzt sein. Hierzu kann der Produktionsstandort 10 über ein entsprechendes Netzwerk verfügen. Ferner kann bspw. die elektronische Recheneinrichtung 14 auch mit einem Parkplatz 22 für Kraftfahrzeuge 24 vernetzt sein. Im folgenden Ausführungsbeispiel weist der Parkplatz 22 insbesondere eine Ladestation 26 zum Laden des Kraftfahrzeugs 24 auf.

Des Weiteren zeigt die FIG, dass bspw. auf einem Dach 28 des Gebäudes 16 eine Energieerzeugungsanlage 30, bspw. in Form einer Photovoltaikanlage, ausgebildet ist.

Insbesondere zeigt somit die FIG auch ein Verfahren zum Betreiben des Produktionsstandorts 10 mittels des Energiemanagementsystems 12. Es wird ein aktueller Produktionsplan 32 für den Produktionsstandort 10 mittels der elektronischen Recheneinrichtung 14 vorgegeben. Es erfolgt ein Bestimmen eines potenziellen Energiebedarfs 34, 36 von zumindest einer der Produktionsanlagen 18, 20 des Produktionsstandorts 10 in Abhängigkeit von dem aktuellen Produktionsplan 32. Vorliegend kann insbesondere die erste Produktionsanlage 18 einen ersten potenziellen Energiebedarf 34 aufweisen und die zweite Produktionsanlage 20 kann einen zweiten potenziellen Energiebedarf 36 aufweisen.

Es wird eine Betriebsstrategie B1, B2 für die Produktionsanlage 18, 20 in Abhängigkeit von dem potenziellen Energiebedarf 34, 36 und in Abhängigkeit von einem vorgegebenen Optimierungskriterium 38 mittels der elektronischen Recheneinrichtung 14 bestimmt.

Im folgenden Ausführungsbeispiel wird bspw. für die erste Produktionsanlage 18 eine erste Betriebsstrategie B1 und für die zweite Produktionsanlage 20 eine zweite Betriebsstrategie B2 bestimmt. Es erfolgt das Bestimmen einer weiteren Betriebsstrategie B3, B4, B5 für den Produktionsstandort 10 für eine Energiebereitstellung für den Produktionsstandort 10, wobei die Energiebereitstellung Energie für die Produktionsanlage 18, 20 und/oder des Gebäudes 16 und/oder eine externe Energiebereitstellungseinrichtung und/oder einer Steuerung einer Energieerzeugungsanlage 30 des Produktionsstandorts 10 umfasst.

Im folgenden Ausführungsbeispiel kann bspw. eine dritte Betriebsstrategie B3 für das Gebäude 16, eine vierte Betriebsstrategie B4 für die Erzeugungsanlage 30 und eine fünfte Betriebsstrategie B5 für die Ladestation 26 bestimmt werden.

Insbesondere ist dabei vorgesehen, dass mittels der zumindest einen Produktionsanlage 18, 20 ein Leistungsprofil der Produktionsanlage 18, 20 bestimmt wird und in Abhängigkeit von dem Leistungsprofil der potenzielle Energiebedarf 34, 36 bestimmt wird.

Weiterhin kann vorgesehen sein, dass die Produktionsanlage 18, 20 für eine möglichst hohe Erzeugungsrate (Throughput) bei möglichst niedrigen Energieverbrauch incentiviert wird.

Ebenfalls kann vorgesehen sein, dass als Optimierungskriterium 38 ein möglichst geringer CO₂-Ausstoß und/oder ein möglichst geringer Energieverbrauch vorgegeben wird.

Insbesondere kann weiterhin vorgesehen sein, dass bei der weiteren Betriebsstrategie B3, B4, B5 ein aktuelles Wetter und/oder ein zukünftiges Wetter berücksichtigt wird. Ferner kann in Abhängigkeit von der bestimmten weiteren Betriebsstrategie B3, B4, B5 eine Energiebereitstellung für eine Ladeeinrichtung 26 für eine mobile Einrichtung, bspw. das Kraftfahrzeug 24, bestimmt werden.

Ebenfalls kann vorgesehen sein, dass bei der Betriebsstrategie B1, B2 eine Einschaltzeit der Produktionsanlage 18, 20 und/oder eine Ausschaltzeit der Produktionsanalage 18, 20 und/oder eine Produktionsgeschwindigkeit der Produktionsgeschwindigkeit der Produktionsanlage 18, 20 und/oder ein Produktionsweg innerhalb der Produktionsanlage 18, 20 bestimmt wird.

Ferner kann vorgesehen sein, dass beim Bestimmen der Betriebsstrategie B1, B2 und der weiteren Betriebsstrategie B3, B4, B5 zumindest eine technische Randbedingung des Produktionsstandorts 10 und/oder Randbedingung einer Umgebung des Produktionsstandorts 10 berücksichtigt werden. Ferner kann auch ein potenzieller Energiebedarf im Ruhemodus der Produktionsanalage 18, 20 mit bei der Betriebsstrategie B1, B2 berücksichtigt werden.

Weiterhin kann vorgesehen sein, dass mittels der elektronischen Recheneinrichtung 14 in Abhängigkeit von der bestimmten Betriebsstrategie B1, B2 eine Einschaltfreigabe für die Produktionsanlage 18, 20 erzeugt wird. Ferner kann ein die Betriebsstrategie B1, B2 betreffendes Ereignis an der Produktionsanlage 18, 20 detektiert werden und das Ereignis an die elektronische Recheneinrichtung 14 übertragen werden. Die bestimmte Betriebsstrategie B1, B2 und die bestimmte weitere Betriebsstrategie B3, B4, B5 können mit dem Produktionsplan 32 abgespeichert und für die zukünftige Produktionspläne 32 berücksichtigt.

Insbesondere zeigt somit die FIG, dass jedes Gerät, welches bspw. als Teil einer Produktionsanlage 18, 20 angesehen werden kann, ob im Gebäude 16 oder in der Produktion, wird dabei intelligent ausgeführt, d.h. insbesondere verfügt jedes Gerät über eine entsprechende Leistungsmessung. Jedes Gerät lernt aus seinen vergangenen Verhalten, d.h. bspw. Leistung gegenüber gestellt zum Betriebsmodus, die Leistungsaufnahme bzw. Abgabe gegenüber dem Betriebsmodus und ggf. das Profil. Hierdurch kann auch das Einsparpotenzial durch entsprechende Standby-Energiereduktion ermittelt werden. Falls ein Gerät dies nicht kann, so wird eine Leistungsmessung des Geräts oder auf einer höheren Aggregationsebene eine Leistungsmessung als Störgröße berücksichtigt.

Bevor ein Gerät eine Einschaltfreigabe erhält, schickt es einen Request an eine übergeordnete Aggregationsstufe, z.B. eine intelligente Produktionsmaschine schickt ein Request an eine entsprechende elektronische Recheneinrichtung 14. Wenn diese Aggregationsstufe in der Lage ist zu bestimmen, ob das Gerät einschalten darf, so wird die Einschaltfreigabe erteilt. Falls nicht, wird eine aggregierte Freigabe an die nächst höhere Aggregationsstufe gestellt. Aggregationsstufen können sich Kapazitäten sichern, die sie verwalten können. Auf einer Ebene gibt es einen sogenannten Master-Aggregator, der die Gesamtkapazität verwaltet. Dies kann z.B. eine zentrale Instanz für ein Industriestandort sein, insbesondere die elektronische Recheneinrichtung 14.

Alle Geräte wissen nicht nur, wie sie energietechnisch verordnet sind, also welchem Subsystem sie zugehören, sondern kennen auch ihre Identitäten sowie die Identitäten von weiteren Geräten innerhalb der Wertschöpfungskette, falls es welche gibt. Dies können auch Speicher sein oder verarbeitende Schritte.

Jedes Gerät ist incentiviert das eigene Verhalten zu erlernen, um möglichst genau ein Profil anzufragen, das der Realität möglichst genau entspricht. Auch die Kapazitätsabfrage auf den Aggregationsebenen ist insofern incentiviert, dass Kapazitäten Ressourcen kosten und Wartezeiten von Geräten ebenfalls Ressourcen kosten. Um möglichst genau und vorzeitig Kapazitäten für die untergeordneten Geräte abzufragen, können die untergeordneten Geräte entsprechende Betriebsstatusänderungen als Ereignis an die übergeordnete Aggregationsschicht übermitteln. Jedes Gerät ist incentiviert auf möglichst hohen Durchsatz zu erzeugen, insbesondere gemäß Produktionsplan 32, sowie möglichst wenig Energie zu verbrauchen.

Der Master-Aggregator kann nun nach unterschiedlichen Kriterien die Einschaltung von Geräten bzw. Kapazitäten freigeben, z.B. nach Netzanschlusslast oder nach geplanter Verfügbarkeit von Grünstrom. Insbesondere ist das Verfahren dabei sowohl für voll- als auch teil-automatisierte Fertigungen, insbesondere das Zusammenwirkung von diesen selbst, anwendbar.

Erzeugte Produkte können mit einer Indizierung versehen werden, sodass die Produktion selbst erlernen kann, von wo nach wo entsprechende Produkte wandern. Auch sogenannte übergeordnete Einheiten in der Produktion können automatisch erkannt werden, dies sind z.B. Teile einer Produktionslinie, oder eine gewisse zusammengehörende Menge an Produktionsanlagen, und lassen sich so "on the fly" konstruieren.

Im Energiemanagementsystem 12 für den Produktionsstandort 10 kann die Produktion nun wie folgt berücksichtigt werden. Als Erinnerungsfunktion, dass das Ziel ist, maximal Throughput innerhalb der Produktion mit geringstem Energieverbrauch zu produzieren, und dabei die geringste Energiekosten und geringsten CO₂-Throughput zu erreichen. Die Produktion ist derart incentiviert, so viel wie möglich Throughput zu erreichen bzw. zu produzieren. Ebenso sind die Produktionsanlagen 18, 20 in der Produktion incentiviert möglichst wenig Energie zu verbrauchen. Auf die Gesamtstandortebene, bei der die Interaktion des Industriestandorts bestehend beispielsweise aus Produktion, Gebäude 16, ggf. Immobilität, ggf. eigenen Erzeugern und Speichern, übergeordnete Netzen und Versorgung, bei denen Energie eine Rolle spielt, greift das Energiemanagementsystem 12 weiter ein, um die Energiekosten und den CO₂-Fußabdruck zu optimieren. Hierbei kann entweder singulär die Ressourcen oder singulär CO₂, oder gemischt mit Gewichtung, oder erst nach Ressourcen und in gewisser Relaxation nachgelagert CO₂ oder erst nach CO₂ und in gewisser Relaxation nachgelagert nach Ressourcen optimiert werden. Der Energieverbrauch bzw. Energiekosten in Bezug auf den Throughput bzw. Erzeugungsmaße können hier noch eine zusätzliche dritte Dimension bilden. Das Energiemanagementsystem 12 löst hierbei die Energieversorgungsaufgabe nach Zielvorgabe möglichst kostengünstig. Das Energiemanagementsystem 12 ist incentiviert möglichst viel Produktionslast zuzulassen.

Der kritische Punkt ist hiermit die Koordination zwischen Erzeugungs- und Verbraucherseite, was wie folgt gelöst wird. Alle in der Produktion unterlagerten Prozesse sind incentiviert so schnell wie möglich und so gut wie möglich Verbrauch bzw. Erzeugung zu melden, wie bereits beschrieben. Damit liegen alle bekannten Voraussagen des Verbrauches bzw. der Erzeugung dem Energiemanagement 12 vor. Diese können noch um eigene datengetriebene vorhersagen der Produktion, bspw. Verbrauch und Erzeugung, ergänzt werden, insbesondere für einen längeren Zeitraum. Auch die Integration von Daten von Drittanbietern, wie z.B. Temperaturdaten und Wetterdaten, insbesondere Sonnenscheinstunden, um Nachfrageseite, z.B. Heizbedarf, und Eigenerzeugung durch Photovoltaik in die multivariable Kalkulation und Optimierung zu integrieren, kann genutzt werden. Sobald neue Kapazitätsanfragen vorliegen, triggern diese ein Ereignis im Energiemanagementsystem 12, das eine Neuplanung auslöst. Hierbei kann auf dem bestehenden Plan als Initiallösung zugegriffen werden.

Bei der eigentlichen Koordination von Erzeugung und Verbrauch sind zumindest zwei Varianten möglich. Es wird über eine Ressourcenhöhe, den die Produktion bereit ist für Energie zu zahlen, geschaut, ob Energie zu dieser Ressourcenhöhe bereitgestellt werden kann, was insbesondere einer binären Aufgabe entspricht. Dies können z.B. Grenzkosten sein, bei der Produktion und Vertrieb des produzierten Gutes noch wirtschaftlich sind, insbesondere heruntergebrochen auf den jeweiligen Fertigungsschritt.

Zweitens können die Geräte alternative Kapazitätsanfragen melden, ggf. nach Ressourcen bewertet. Das Energiemanagementsystem 12 kann nun aus den alternativen Kapazitätsanfragen die beste auswählen.

Im Anschluss können die Grenzkosten der Bereitstellung einzelner Energieformen zum jeweiligen Zeitpunkt ermittelt werden und dem Produktionsschritt zugewiesen werden. Hierdurch lässt sich z.B. ein Dynamicpricing des Endprodukts realisieren.

### Bezugszeichenliste

- 10: Produktionsstandort
- 12: Energiemanagementsystem
- 14: elektronische Recheneinrichtung
- 16: Gebäude
- 18: erste Produktionsanlage
- 20: zweite Produktionsanlage
- 22: Parkplatz
- 24: Kraftfahrzeug
- 26: Ladestation
- 28: Dach
- 30: Energieerzeugungsanlage
- 32: Produktionsplan
- 34: erster potenzieller Energiebedarf
- 36: zweiter potenzieller Energiebedarf
- 38: Optimierungskriterium
- B1: erste Betriebsstrategie
- B2: zweite Betriebsstrategie
- B3: dritte Betriebsstrategie
- B4: vierte Betriebsstrategie
- B5: fünfte Betriebsstrategie

## Patentansprüche

1. Verfahren zum Betreiben eines Produktionsstandorts (10) mittels eines Energiemanagementsystems (12) des Produktionsstandorts (10), mit den Schritten:
- Vorgeben eines aktuellen Produktionsplans (32) für den Produktionsstandort (10) mittels einer elektronischen Recheneinrichtung (14) des Energiemanagementsystems (12);
- Bestimmen eines potentiellen Energiebedarfs (34, 36) von zumindest einer Produktionsanlage (18, 20) des Produktionsstandorts (10) in Abhängigkeit von dem aktuellen Produktionsplan (32) mittels der elektronischen Recheneinrichtung (14);
- Bestimmen einer Betriebsstrategie (B1, B2) für die Produktionsanlage (18, 20) in Abhängigkeit von dem potentiellen Energiebedarf (34, 36) und in Abhängigkeit von einem vorgegebenen Optimierungskriterium (38) mittels der elektronischen Recheneinrichtung (14); und
- Bestimmen einer weiteren Betriebsstrategie (B3, B4, B5) für eine Energiebereitstellung für den Produktionsstandort (10) mittels der elektronischen Recheneinrichtung (14), wobei die Energiebereitstellung Energie für die Produktionsanlage (18, 20) und/oder eines Gebäudes (16) des Produktionsstandorts (10) und/oder einer externen Energiebereitstellungseinrichtung umfasst und/oder eine Steuerung einer Energieerzeugungsanlage (30) des Produktionsstandorts (10) umfasst.

2. Verfahren nach Anspruch 1, **dadurch gekennzeichnet, dass** mittels der zumindest einen Produktionsanlage (18, 20) ein Leistungsprofil der Produktionsanlage (18, 20) bestimmt wird und in Abhängigkeit von dem Leistungsprofil der potentielle Energiebedarf (34, 36) bestimmt wird.

3. Verfahren nach Anspruch 1 oder 2, **dadurch gekennzeichnet, dass**
die Produktionsanlage (18, 20) für eine möglichst hohe Erzeugungsrate bei möglichst niedrigem Energieverbrauch incentiviert wird.

4. Verfahren nach einem der vorhergehenden Ansprüche, **dadurch gekennzeichnet, dass**
als Optimierungskriterium (38) ein möglichst geringer CO2-Ausstoß und/oder ein möglichst geringer Energieverbrauch vorgeben wird.

5. Verfahren nach einem der vorhergehenden Ansprüche, **dadurch gekennzeichnet, dass**
bei der weiteren Betriebsstrategie (B3, B4, B5) ein aktuelles Wetter und/oder ein zukünftiges Wetter berücksichtigt wird.

6. Verfahren nach einem der vorhergehenden Ansprüche, **dadurch gekennzeichnet, dass**
in Abhängigkeit von der bestimmten weiteren Betriebsstrategie (B3, B4, B5) eine Energiebereitstellung für eine Ladeeinrichtung (26) für mobile Einrichtungen bestimmt wird.

7. Verfahren nach einem der vorhergehenden Ansprüche, **dadurch gekennzeichnet, dass**
bei der Betriebsstrategie (B1, B2) eine Einschaltzeit der Produktionsanlage (18, 20) und/oder eine Ausschaltzeit der Produktionsanlage (18, 20) und/oder eine Produktionsgeschwindigkeit der Produktionsanlage (18, 209 und/oder ein Produktionsweg innerhalb der Produktionsanlage (18, 20) bestimmt wird.

8. Verfahren nach einem der vorhergehenden Ansprüche, **dadurch gekennzeichnet, dass**
beim Bestimmen der Betriebsstrategie (B1, B2) und der weiteren Betriebsstrategie (B3, B4, B5) zumindest eine technische Randbedingung des Produktionsstandorts (10) und/oder eine Randbedingung einer Umgebung des Produktionsstandorts (10) berücksichtigt werden.

9. Verfahren nach einem der vorhergehenden Ansprüche, **dadurch gekennzeichnet, dass**
ein potentieller Energiebedarf (34, 36) in einem Ruhemodus der Produktionsanlage (18, 209 mit bei der Betriebsstrategie (B1, B2) berücksichtigt wird.

10. Verfahren nach einem der vorhergehenden Ansprüche,
**dadurch gekennzeichnet, dass**
mittels der elektronischen Recheneinrichtung (14) in Abhängigkeit von der bestimmten Betriebsstrategie (B1, B2) eine Einschaltfreigabe für die Produktionsanlage (18, 20) erzeugt wird.

11. Verfahren nach einem der vorhergehenden Ansprüche,
**dadurch gekennzeichnet, dass**
ein an der Produktionsanlage (18, 20) detektiertes und die Betriebsstrategie (B1, B2) betreffendes Ereignis an die elektronische Recheneinrichtung (14) übertragen wird.

12. Verfahren nach einem der vorhergehenden Ansprüche,
**dadurch gekennzeichnet, dass**
die bestimmte Betriebsstrategie (B1, B2) und die bestimmte weitere Betriebsstrategie (B3, B4, B6) mit dem Produktionsplan (32) abgespeichert werden und für zukünftige Produktionspläne berücksichtigt werden.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Energiemanagementsystems (12) für einen Produktionsstandort (10) zum Betreiben des Produktionsstandorts (10), mit zumindest einer elektronischen Recheneinrichtung (14), wobei das Energiemanagementsystem (12) zum Durchführen eines Verfahrens nach einem der Ansprüche 1 bis 12 ausgebildet ist.
